# EUROPEAN PATENT SPECIFICATION

(11) **EP 3 163 770 B1**
(45) Date of publication and mention of the grant of the patent: **04.12.2019**
(21) Application number: 14895942.2
(22) Date of filing: 14.10.2014
(51) Int. Cl.: H04B 10/25, H04B 10/071

(54) **OPTICAL FIBER DETECTION METHOD, DETECTION DEVICE, DETECTION PLATFORM AND ELEMENT MANAGEMENT SYSTEM**
GLASFASERDETEKTIONSVERFAHREN, NACHWEISVORRICHTUNG, NACHWEISPLATTFORM UND ELEMENTVERWALTUNGSSYSTEM
PROCÉDÉ DE DÉTECTION DE FIBRE OPTIQUE, DISPOSITIF DE DÉTECTION, PLATE-FORME DE DÉTECTION ET SYSTÈME DE GESTION D'ÉLÉMENT

(30) Priority: 27.06.2014 CN 201410305518
(43) Date of publication of application: 03.05.2017
(73) Proprietor: ZTE Corporation, Shenzhen, Guangdong 518057 (CN)
(72) Inventor: WEN, Yong, Shenzhen Guangdong 518057 (CN)
(74) Representative: CMS Cameron McKenna Nabarro Olswang LLP
(86) International application number: PCT/CN2014/088578
(87) International publication number: WO 2015/196638

(56) References cited:
- EP-A1- 1 980 834
- CN-A- 1 115 380
- CN-A- 1 540 887
- CN-A- 101 630 972
- CN-A- 101 984 561
- CN-A- 102 386 971
- CN-A- 102 811 090
- US-A1- 2013 259 469
- US-B1- 8 655 167

## Description

### Technical Field

The present invention relates to the field of optical fiber communications, and in particular to an optical fiber detection method and platform.

### Background

In optical transmission systems, the performance of transmission optical fibers and optical cables directly affects the reliability of a communication system; however, transmission optical fibers are highly likely to go wrong, for example, optical cables curve or break, in such cases, it is needed to locate the fault quickly and repair optical fibers/ optical cables quickly so as to recover normal communication.

With the development of optical transmission, a great quantity of long-haul optical fibers are laid and placed, consequentially, network operation and maintenance, especially the detection and the fault location of optical fiber links, have become one of the most concerned problems for operators.

In optical transmission systems, existing optical fiber detection methods mainly use an Optical Time Domain Reflectometer (OTDR) meter or an optical fiber monitoring device with an integrated OTDR function to locate a fault after an optical fiber is faulted. However, such devices are irrelative with optical transmission devices and must be operated and used separately, therefore, for an optical fiber link equipped with no OTDR meter or device, the maintainer has to carry a meter or device to a station to locate a fault by scanning optical fibers manually, moreover, a certain degree of effect is caused to services every time an OTDR meter is connected, thus leading to high maintenance cost but low maintenance cost for the operator.

US 8,655,167 B1 discloses implementations of techniques and systems for detecting a fiber faul in a point-to-point optical access network based on optical time domain reflectometry (OTDR) measurements.

EP 1 980 834 A1 discloses a light beam path monitoring device and a light beam path monitoring method.

### Summary of the Invention

An optical fiber detection method and platform are provided in the embodiment of present invention to at least address the technical problem existing in the related art that optical fiber detection is time-consuming and labor-consuming and affects the transmission of service light.

To achieve the foregoing purpose, an optical fiber detection method as defined in claim 1 is provided.

The step that an optical fiber path required to be detected is selected and relevant parameters of an optical fiber detection device related to the optical fiber path are set may include that:
the optical fiber path required to be detected is selected through a visual interface.

Optionally, after the step that a detection starting instruction is sent to the optical fiber detection device for the optical fiber detection device to detect the optical fiber path according to the detection starting instruction, the optical fiber detection method may further include that:
an OTDR device is controlled to output detection light and transmit the detection light into the selected optical fiber path through a 1^{∗}N optical switch;
a Fiber Multiplexer-Demultiplexer (FMD) device is controlled to transmit the detection light and the service light in one path or in separate paths; and
the OTDR device is controlled to collect returned reflected light and analyze the collected reflected light.

The step that a FMD device is controlled to transmit the detection light and the service light in one path or in separate paths may include that:
when the detection light is selected by the 1^{∗}N optical switch, the FMD device is controlled to combine the detection light and the service light into one optical fiber for transmission; and
when the optical signal of the combined path reaches a WMD station terminal, the FMD device is controlled to filter out the detection light and continue to transmit the service light to the next station.

The step that the OTDR device is controlled to collect returned reflected light and analyze the collected reflected light includes that:
the OTDR device is controlled to collect returned reflected light and analyze the collected reflected light to acquire the intensity and the reception time of the detection light and those of the reflected light; and
the length 1 and the optical fiber loss coefficient α of the detected optical fiber are calculated according to formulas: 1=(1/2)^{∗}(c/n)^{∗}t and Ps=P0^{∗}e^{-2α1}, in which c represents the speed of light, n represents the refractive index of a medium, and t represents the time elapsing from the moment the detection light is started to be emitted to the moment the reflected light is received.

Furthermore, an optical fiber detection platform as defined in claim 3 is also provided by the present invention.

The selecting and setting module may be arranged to:
select the optical fiber path required to be detected through a visual interface.

The network element management system may further include:
an OTDR module arranged to control an OTDR device to output detection light and transmit the detection light into the selected optical fiber path through a 1^{∗}N optical switch, and control the OTDR device to collect returned reflected light and analyze the collected reflected light; and
an FMD module arranged to control an FMD device to transmit the detection light and the service light in one path or in separate paths.

The FMD module may be arranged to:
control the FMD device to combine the detection light and the service light into one optical fiber output if the detection light is selected by the 1^{∗}N optical switch; and
control the FMD device to filter out the detection light and continue to transmit the service light to the next station when the optical signal of the combined path reaches a WMD station terminal.

The OTDR module is arranged to:
control the OTDR device to collect returned reflected light and analyze the collected reflected light to acquire the intensity and the reception time of the detection light and those of the reflected light; and
calculate the length 1 and the optical fiber loss coefficient α of the detected optical fiber according to formulas: 1=(1/2)^{∗}(c/n)^{∗}t and Ps=P0^{∗}e^{-2α1}, in which c represents the speed of light, n represents the refractive index of a medium, and t represents the time elapsing from the moment the detection light is started to be emitted to the moment the reflected light is received.

Furthermore, an optical fiber detection device is also disclosed which includes an OTDR device with an integrated OTDR function and an FMD device with an integrated FMD function, the OTDR device is connected with an optical fiber link.

The OTDR device includes an OTDR, a first control unit and a 1^{∗}N optical switch, herein the OTDR and the 1^{∗}N optical switch are electrically connected with the first control unit; the OTDR and the 1^{∗}N optical switch are connected through optical fibers; the first control unit controls the OTDR to emit detection light to the 1 ^{∗}N optical switch, controls the 1^{∗}N optical switch to select a detected optical fiber , and realizes the interaction between the OTDR device and a network element management system.

The FMD device includes a FMD and a second control unit; after detection light is selected by the 1^{∗}N switch, the detection light enter the FMD together with service light to form one optical fiber output, then the detection light included in the light signal of the combined path is filtered out by the FMD so that the service light is transmitted to the next station, and the second control unit realizes the interaction between the FMD device and the network element management system.

The optical fiber detection platform includes a network element management system and an optical fiber detection device connected in communication with the network element management system.

The network element management system is arranged to select an optical fiber path required to be detected, set relevant parameters of an optical fiber detection device related to the optical fiber path, send a detection starting instruction to the optical fiber detection device for the optical fiber detection device to detect the optical fiber path according to the detection starting instruction, receive a result of the detection performed by the optical fiber detection device on the optical fiber path, and analyze the result of the detection to acquire the working status of the optical fiber path.

The optical fiber detection device is arranged to receive the detection starting instruction sent from the network element management system, detect the optical fiber path required to be detected and send the result of the detection on the optical fiber path to the network element management system.

In the present invention, by relating an optical fiber detection device with a network element management system, selecting an optical fiber path required to be detected and setting relevant parameters of an optical fiber detection device related to the optical fiber path first, then sending a detection starting instruction to the optical fiber detection device for the optical fiber detection device to detect the optical fiber path according to the detection starting instruction, and last receiving the result of the detection performed by the optical fiber detection device on the optical fiber path and analyzing the result of the detection to acquire the working status of the optical fiber path, the present invention frees the maintainer from carrying a meter or device to a station to locate a fault by scanning optical fibers manually, avoids the effect that is caused to services every time an OTDR meter is connected, reduces the maintenance cost of the operator, and improves optical fiber detection efficiency.

### Brief Description of Drawings

FIG. 1 is a flowchart illustrating a first embodiment of the optical fiber detection method of the present invention;
FIG. 2 is a flowchart illustrating the detailed flow of the step of selecting an optical fiber path required to be detected and setting relevant parameters of an optical fiber detection device related to the optical fiber path shown in FIG. 1;
FIG. 3 is a flowchart illustrating a second embodiment of the optical fiber detection method of the present invention;
FIG. 4 is a flowchart illustrating the detailed flow of the step of controlling an FMD device to transmit the detection light and the service light in one path or in separate paths shown in FIG. 3;
FIG. 5 is flowchart illustrating the detailed flow of the step of controlling an OTDR device to collect returned reflected light and analyzing the collected reflected light shown in FIG. 3;
FIG. 6 is a schematic diagram illustrating functional modules of a first embodiment of the network element management system of the present invention;
FIG. 7 is a schematic diagram illustrating functional modules of a second embodiment of the network element management system of the present invention;
FIG. 8 is a schematic diagram illustrating the structure of the optical fiber detection device of the present invention;
FIG. 9 is a schematic diagram illustrating the structure of an OTDR device of the present invention;
FIG. 10 is a schematic diagram illustrating the structure of an FMD device of the present invention;
FIG. 11 is a schematic diagram illustrating the structure of the optical fiber detection platform of the present invention; and
FIG. 12 is a structural schematic diagram illustrating the application of the optical fiber detection device of the present invention to an optical transmission system.

The objects, the functional features and the advantages of the present invention will be described below with reference to accompanying drawings in conjunction with embodiments.

### Specific Embodiments of the Present Invention

It should be appreciated that the specific embodiment described herein are merely illustrative of, but are not intended to limit the present invention.

An optical fiber detection method is provided in the present invention.

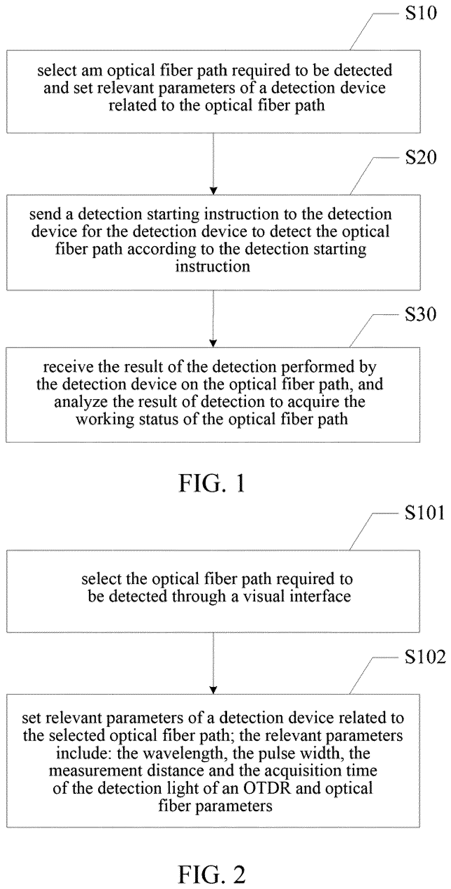

Refer to FIG. 1, FIG. 1 is a flowchart illustrating a first embodiment of the optical fiber detection method of the present invention.

In an embodiment, the optical fiber detection method includes:
Step 10: an optical fiber path required to be detected is selected, and relevant parameters of an optical fiber detection device related to the optical fiber path are set;
   The optical fiber path required to be detected is selected by a network element management system, and relevant parameters of an OTDR device are set by the network element management system;
Step 20: a detection starting instruction is sent to the optical fiber detection device for the optical fiber detection device to detect the optical fiber path according to the detection starting instruction;
   The network element management system sends the detection starting instruction to the optical fiber detection device, and the optical fiber detection device emits detection light towards the selected optical fiber path after receiving the instruction.
Step 30: the result of the detection performed by the optical fiber detection device on the optical fiber path is received, and the result of the detection is analyzed to acquire the working status of the optical fiber path.

The OTDR module of the network element management system controls the optical fiber detection device to collect returned reflected light and scattered light, the optical fiber detection device analyzes the data collected to obtain a result of the detection, then the optical fiber detection device feeds back the result of the detection to the network management system so that the optical attenuation and other information of the detected optical fiber can be queried on the network element management system; and after the current optical fiber is detected, the next optical fiber path can be manually switched to be detected, or an automatic polling detection is set.

In the embodiment, because an optical fiber detection device is added at a station and related with a network element management system, a multi-path detection for transmission optical fibers is realized by selecting an optical fiber path required to be detected and setting relevant parameters of an optical fiber detection device related to the optical fiber path first, then sending a detection starting instruction to the optical fiber detection device for the optical fiber detection device to detect the optical fiber path according to the detection starting instruction, and last receiving the result of the detection performed by the optical fiber detection device on the optical fiber path and analyzing the result of the detection to acquire the working status of the optical fiber path, thus freeing the maintainer from carrying a meter or device to a station to locate a fault by scanning optical fibers manually, avoiding the effect that is caused to services every time an OTDR meter is connected, reducing the maintenance cost of the operator, and improving optical fiber detection efficiency.

Further, refer to FIG. 2, FIG. 2 is a flowchart illustrating the detailed flow of the step of selecting an optical fiber path required to be detected and setting relevant parameters of an optical fiber detection device related to the optical fiber path shown in FIG. 1.

Step S10 includes:
Step S101: the optical fiber path required to be detected is selected through a visual interface.

The network element management system displays each optical fiber path on a visual interface for the user to select an optical fiber path required to be detected, thus avoiding the identification of optical fiber paths with pure data information and improving the ease of use for the user.

Step S102: relevant parameters of an optical fiber detection device related to the optical fiber path are set, and the relevant parameters include: the wavelength, the pulse width, the measurement distance and the acquisition time of the detection light of an OTDR and optical fiber parameters.

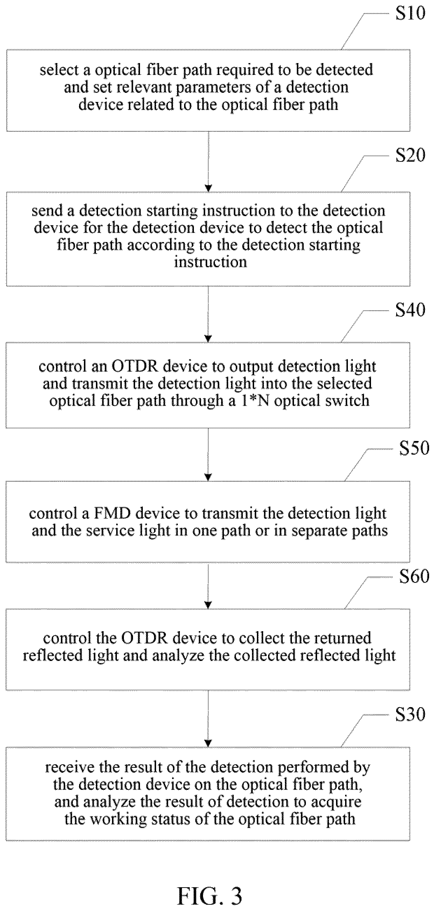

Further, refer to FIG. 3, FIG. 3 is a flowchart illustrating a second embodiment of the optical fiber detection method of the present invention.

In the second embodiment, the optical fiber detection method further includes the following steps after Step 20:
Step S40: an OTDR device is controlled to output detection light and transmit the detection light into the selected optical fiber path through a 1^{∗}N optical switch;

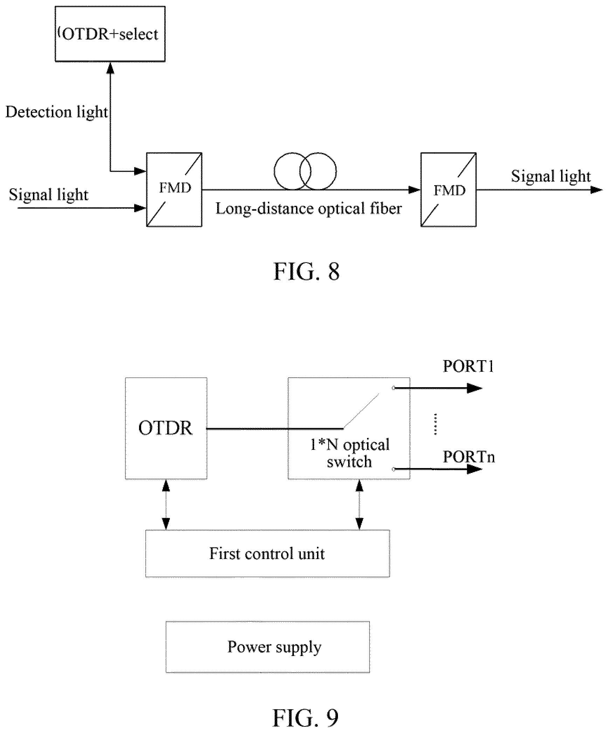

Refer to FIG. 8, FIG. 9 and FIG. 10, when the OTDR device is controlled to emit detection light, the optical fiber to be detected is selected according to the 1^{∗}N optical switch, for example, if PORT1 (port 1) is selected by the optical switch, then the optical fiber that is to be detected and matched with PORT1 is detected; if PORT2 is selected by the optical switch, then the optical fiber that is to be detected and matched with PORT2 is detected, so on and so forth, if PORTn is selected by the optical switch, then the optical fiber that is to be detected and matched with PORTn is detected.

Step S50: an FMD device is controlled to transmit the detection light and the service light in one path or in separate paths;
Refer to FIG. 8, FIG. 9 and FIG. 10, after the detection light emitted from the OTDR device is selected through the optical switch, the detection light and service light enter the FMD device together to be combined into one optical fiber output via a fiber Multiplexer-Demultiplexer (FMD); at a WDM station terminal, the optical signal of the combined path passes through the FMD so that the detection light is filtered out and the service light is mechanically transmitted to the next station. Generally, the detection light is defined as the light of L waveband (1625nm) and the service light is defined as the light of C waveband (1550nm) so that the FMD device can detect transmission optical fibers without affecting services.

Step S60: the OTDR device is controlled to collect returned reflected light and analyze the collected reflected light.

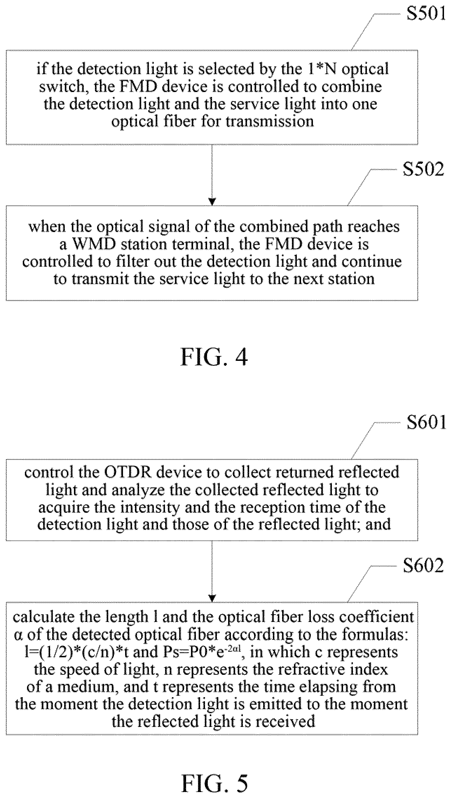

Further, refer to FIG. 4, FIG. 4 is a flowchart illustrating the detailed flow of the step of controlling an FMD device to transmit the detection light and the service light in one path or in separate paths shown in FIG. 3.

Step S50 includes:
Step S501: if the detection light is selected by the 1^{∗}N optical switch, the FMD device is controlled to combine the detection light and the service light into one optical fiber for transmission;
   after the detection light emitted from the OTDR device is selected through the optical switch, the detection light and the service light enter the FMD device together to be combined into one optical fiber output by the FMD.
Step S502: when the optical signal of the combined path reaches a WMD station terminal, the FMD device is controlled to filter out the detection light and continue to transmit the service light to the next station.

At a WDM station terminal, the optical signal of the combined path passes through the FMD so that the detection light is filtered out and the service light is mechanically transmitted to the next station.

Generally, the detection light is defined as the light of L waveband (1625nm) and the service light is defined as the light of C waveband (1550nm) so that the FMD device can detect transmission optical fibers without affecting service; and the 1^{∗}N switch is generally a 1^{∗}4 or 1^{∗}8 optical switch.

Further, refer to FIG. 5, FIG. 5 is flowchart illustrating the detailed flow of the step of controlling an OTDR device to collect returned reflected light and analyzing the collected reflected light shown in FIG. 3.

Step S60 includes:
Step S601: the OTDR device is controlled to collect returned reflected light and analyze the collected reflected light to acquire the intensity and the reception time of the detection light and those of the reflected light; and
Step S602: the length 1 and the optical fiber loss coefficient α of the detected optical fiber are calculated according to the formulas: 1=(1/2)^{∗}(c/n)^{∗}t and Ps=P0^{∗}e^{-2α1}, in which c represents the speed of light, n represents the refractive index of a medium, and t represents the time elapsing from the moment the detection light is started to be emitted to the moment the reflected light is received.

By comparing the intensity of the detection light, that of the reflected light and the length 1 and the optical fiber loss coefficient α of the detected optical fiber that are calculated according to the formulas: 1=(1/2)^{∗}(c/n)^{∗}t and Ps=P0^{∗}e^{-2α1}, a track depicting the intensity of the signal in the whole optical fiber is obtained, thus facilitating the acquisition of the working status of the optical fiber path.

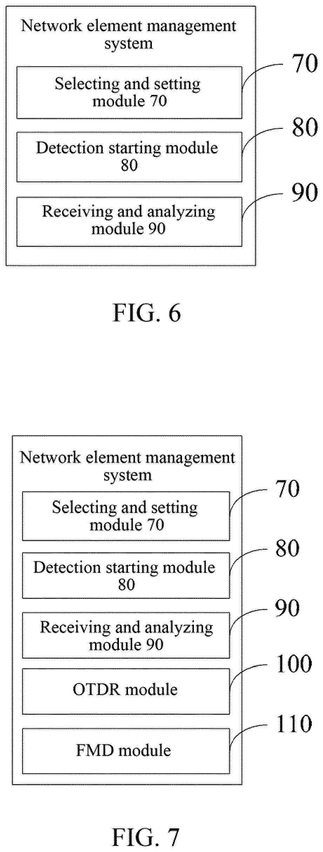

Furthermore, a network element management system is also provided by the present invention, refer to FIG. 6, FIG. 6 is a schematic diagram illustrating functional modules of a first embodiment of the network management system of the present invention.

In the first embodiment, the network element management system includes:
a selecting and setting module 70 arranged to select an optical fiber path required to be detected and set relevant parameters of an optical fiber detection device related to the optical fiber path;
the selecting and setting module 70 selects an optical fiber path required to be detected and sets relevant parameters of an OTDR device;
the selecting and setting module 70 sends a detection starting instruction to the optical fiber detection device, and the optical fiber detection device emits detection light towards the selected optical fiber path after receiving the instruction;
a detection starting module 80 arranged to send a detection starting instruction to the optical fiber detection device for the optical fiber detection device to detect the optical fiber path according to the detection starting instruction; and
a receiving and analyzing module 90 arranged to receive a result of the detection performed by the optical fiber detection device on the optical fiber path and analyze the result of the detection to acquire the working status of the optical fiber path.

The OTDR module of the network element management system controls the optical fiber detection device to collect returned reflected light and scattered light, the optical fiber detection device analyzes the data collected to obtain a result of the detection, then the optical fiber detection device feeds back the result of the detection to the network management system so that the optical attenuation and other information of the detected optical fiber can be queried on the network element management system; after the current optical fiber is detected, the next optical fiber path can be manually switched to for detection, or an automatic polling detection is set.

In the embodiment, because an optical fiber detection device is additionally arranged at a station and related with a network element management system, a multi-path detection for transmission optical fibers is realized in the following way: first, the selecting and setting module 70 selects an optical fiber path required to be detected and sets relevant parameters of an optical fiber detection device related to the optical fiber path, then the detection starting module 80 sends a detection starting instruction to the optical fiber detection device for the optical fiber detection device to detect the optical fiber path according to the detection starting instruction, and last the receiving and analyzing module 90 receives the result of the detection performed by the optical fiber detection device on the optical fiber path and analyzes the result of the detection to acquire the working status of the optical fiber path, thus freeing the maintainer from carrying a meter or device to a station to locate a fault by scanning optical fibers manually, avoiding the effect that is caused to services every time an OTDR meter is connected, reducing the maintenance cost of the operator, and improving optical fiber detection efficiency.

Further, the selecting and setting module 70 is arranged to:
select an optical fiber path required to be detected through a visual interface;
the network element management system displays each optical fiber path on a visual interface for the user to select an optical fiber path required to be detected, thus avoiding the identification of optical fiber paths with pure data information and improving the ease of use for the user; and
set relevant parameters of an optical fiber detection device related to the optical fiber path, the relevant parameters include: the wavelength, the pulse width, the measurement distance and the acquisition time of the detection light of an OTDR and optical fiber parameters of the OTDR.

Further, refer to FIG. 7, FIG. 7 is a schematic diagram illustrating functional modules of a second embodiment of the network element management system of the present invention.

In the second embodiment, the network element management system further includes:
an OTDR module 100 arranged to control an OTDR device to output detection light and emit the detection light into the selected optical fiber path through a 1^{∗}N optical switch and control the OTDR device to collect returned reflected light and analyze the collected reflected light.

Refer to FIG. 8, FIG. 9 and FIG. 10, when the OTDR module 100 controls the OTDR device to emit detection light, the optical fiber to be detected is selected according to the 1^{∗}N optical switch, for example, if PORT1 (port 1) is selected by the optical switch, then the optical fiber that is to be detected and matched with PORT1 is detected; if PORT2 is selected by the optical switch, then optical fiber that is to be detected and matched with PORT2 is detected, so on and so forth, if PORTn is selected by the optical switch, then optical fiber that is to be detected and matched with PORTn is detected; then, the OTDR device is controlled to collect returned reflected light and analyze the collected reflected light.

An FMD module 110 arranged to control an FMD device to transmit the detection light and service light in one path or in separate paths.

After the detection light emitted from the OTDR device is selected through the optical switch, the detection light and the service light from the FMD module 110 enter the FMD device together to be combined into one optical fiber output via a fiber Multiplexer-Demultiplexer (FMD); at a WDM station terminal, the optical signal of the combined path passes through the FMD so that the detection light is filtered out and the service light is mechanically transmitted to the next station. Generally, the detection light is defined as the light of L waveband (1625nm) and the service light is defined as the light of C waveband (1550nm) so that the FMD device can detect transmission optical fibers without affecting services.

Further, the OTDR module 100 is arranged to:
control the OTDR device to collect returned reflected light and analyze the collected reflected light to acquire the intensity and the reception time of the detection light and those of the reflected light; and
calculate the length 1 and the optical fiber loss coefficient α of the detected optical fiber according to the formulas: 1=(1/2)^{∗}(c/n)^{∗}t and Ps=P0^{∗}e^{-2α1}, in which c represents the speed of light, n represents the refractive index of a medium, and t represents the time elapsing from the moment the detection light is started to be emitted to the moment the reflected light is received.

The OTDR module 100 compares the intensity of the detection light, that of the reflected light and the length 1 and the optical fiber loss coefficient α of the detected optical fiber that are calculated according to the following formulas: 1=(1/2)^{∗}(c/n)^{∗}t and Ps=P0^{∗}e^{-2α1} to obtain a track depicting the intensity of the signal in the whole optical fiber, thus facilitating the acquisition of the working status of the optical fiber path.

Further, an optical fiber detection device is provided which, refer to FIG. 8, FIG. 9 and FIG. 10, includes an OTDR device with an integrated OTDR function and an FMD device with an integrated FMD function, the OTDR device is connected with an optical fiber link.

The OTDR device includes an OTDR, a first control unit and a 1^{∗}N optical switch, herein the OTDR and the 1^{∗}N optical switch are electrically connected with the first control unit; the OTDR and 1^{∗}N optical switch are connected with each other through optical fibers; the first control unit controls the OTDR to emit detection light towards the 1^{∗}N optical switch and controls the 1^{∗}N optical switch to select a detected optical fiber and realizes the interaction between the OTDR device and a network element management system.

The FMD device includes an FMD and a second control unit; the detection light, after being selected by the 1^{∗}N switch, enter the FMD together with service light to form one optical fiber output, then the detection light included in the light signal of the combined path is filtered out by the FMD so that the service light is transmitted to the next station, and the second control unit realizes the interaction between the FMD device and the network element management system.

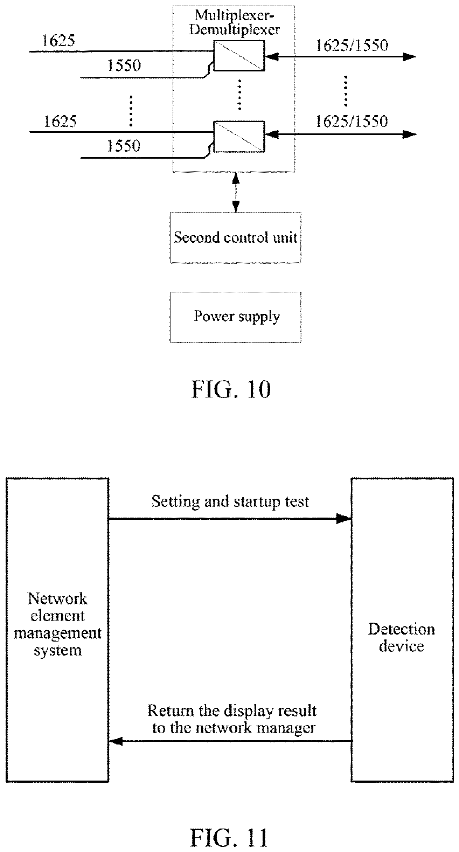

Furthermore, an optical fiber detection platform is also provided by the present invention, and refer to FIG. 11, it includes a network element management system and an optical fiber detection device connected in communication with the network element management system. Herein:
The network element management system is arranged to select an optical fiber path required to be detected, set relevant parameters of an optical fiber detection device related to the optical fiber path, send a detection starting instruction to the optical fiber detection device for the optical fiber detection device to detect the optical fiber path according to the detection starting instruction, receive a result of the detection performed by the optical fiber detection device on the optical fiber path, and analyze the result of the detection to acquire the working status of the optical fiber path.

The optical fiber detection device is arranged to receive the detection starting instruction sent from the network element management system, detect the optical fiber path required to be detected and send the result of the detection on the optical fiber path to the network element management system.

In the embodiment, because an optical fiber detection device is added at a station and related with a network element management system, a multi-path detection for transmission optical fibers is realized by selecting an optical fiber path required to be detected and setting relevant parameters of an optical fiber detection device related to the optical fiber path first, then sending a detection starting instruction to the optical fiber detection device for the optical fiber detection device to detect the optical fiber path according to the detection starting instruction, and last receiving the result of the detection performed by the optical fiber detection device on the optical fiber path and analyzing the result of the detection to acquire the working status of the optical fiber path, thus freeing the maintainer from carrying a meter or device to a station to locate a fault by scanning optical fibers manually, avoiding the effect that is caused to services every time an OTDR meter is connected, reducing the maintenance cost of the operator, and improving optical fiber detection efficiency.

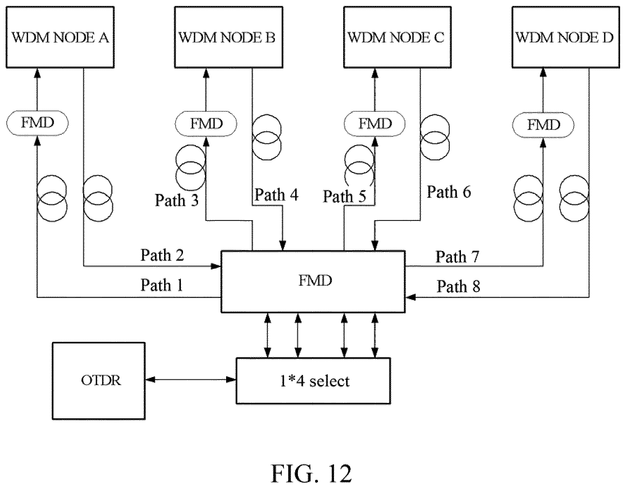

Refer to FIG. 12, FIG. 12 is a structural schematic diagram illustrating the application of the detection device of the present invention to an optical transmission system, there are four stations: stations A/B/C/D in the diagram, in any one of which an integrated OTDR device and an FMD device may be placed. The detection light emitted from an OTDR and an optical fiber to be detected (one of paths 2/4/6/8) are merged into one optical fiber through the FMD, paths 1/3/5/7 are selected to transmit the merged light to the four stations A/B/C/D, before entering the stations, the merged light passes through the FMD again to filter out the detection wave 1625 and transmit the service light 1550 transparently to the stations, thereby realizing the detection of four optical fiber links.

What is described above are preferred embodiments, but they are not intended to limit the patent scope of the present invention, and that any equivalent structures or transformed flow devised based on the description and the accompanying drawings of the present invention or directly or indirectly applied to other related technical fields should fall within the patent protection scope of the present invention.

### Industrial Applicability

As stated above, the optical fiber detection method, device and platform and the network element management system provided by the embodiments of the present invention have the following beneficial effects: there is no need to request a maintainer to carry a meter or device to a station to locate a fault by scanning optical fibers manually, the effect is avoided which is caused to services every time an OTDR meter is connected, the maintenance cost of the operator is reduced, and optical fiber detection efficiency is improved.

## Claims

1. An optical fiber detection method, wherein the online optical fiber detection method comprises following steps:
selecting by a network element management system an optical fiber path required to be detected and setting relevant parameters of an optical fiber detection device related to the optical fiber path (S10), wherein the relevant parameters include: a wavelength, a pulse width, a measurement distance and acquisition time of detection light of an Optical Time Domain Reflectometer, OTDR, and optical fiber parameters;
sending by the network element management system a detection starting instruction to the optical fiber detection device for the optical fiber detection device to detect the optical fiber path according to the detection starting instruction (S20), and the optical fiber detection device emitting detection light towards the selected optical fiber path after receiving the instruction;
controlling by the network element management system the optical fiber detection device to collect returned reflected light and analyse the collected reflected light to acquire intensity and reception time of the detection light and the reflected light;
calculating a length 1 and an optical fiber loss coefficient α of the detected optical fiber according to formulas: 1=(1/2)^{∗}(c/n)^{∗}t and Ps = P0^{∗}e^{-2α1},
wherein c represents a speed of light, n represents a refractive index of a medium and t represents the time elapsing from a moment the detection light is started to be emitted to a moment the reflected light is received, and
comparing the intensity of the detection light and the intensity of the reflected light and the length 1 and the optical fiber loss coefficient α of the detected optical fiber to acquire a working status of the optical fiber path (S30).

2. The optical fiber detection method according to claim 1, wherein the step of selecting an optical fiber path required to be detected and setting relevant parameters of an optical fiber detection device related to the optical fiber path comprises:
selecting the optical fiber path required to be detected through a visual interface; and
setting relevant parameters of the optical fiber detection device related to the selected optical fiber path (S101).

3. An optical fiber detection platform comprising: a network element management system and an optical fiber detection device in communication with the network element management system, wherein the network element management system comprises:
a selecting and setting module (70) arranged to select an optical fiber path required to be detected and set relevant parameters of an optical fiber detection device related to the optical fiber path, wherein the relevant parameters of the optical fiber detection device include: a wavelength, a pulse width, a measurement distance and acquisition time of detection light of an Optical Time Domain Reflectometer, OTDR, and optical fiber parameters;
a detection starting module (80) arranged to send a detection starting instruction to the optical fiber detection device for the optical fiber detection device to detect the optical fiber path according to the detection starting instruction;
a receiving and analyzing module (90) arranged to receive a result of the detection performed by the optical fiber detection device on the optical fiber path and analyze the result of the detection to acquire a working status of the optical fiber path,
wherein the optical fiber detection device is arranged to receive the detection starting instruction from the network element management system; and
an OTDR module (100) arranged to control the optical fiber detection device to collect returned reflected light and analyze the collected reflected light to acquire intensity and reception time of the detection light and the reflected light, calculate a length 1 and an optical fiber loss coefficient α of the detected optical fiber according to formulas: 1=(1/2)^{∗}(c/n)^{∗}t and Ps = P0^{∗}e^{-2α1}, wherein c represents the speed of light, n represents a refractive index of a medium, and t represents time elapsing from the moment the detection light is started to be emitted to the moment the reflected light is received, and compare the intensity of the detection light and the intensity of the reflected light and the length 1 and the optical fiber loss coefficient α of the detected optical fiber .

4. The optical fiber detection platform according to claim 3, wherein the selecting and setting module (70) is arranged to:
select the optical fiber path required to be detected through a visual interface.

## Patentansprüche

1. Glasfasernachweisverfahren, wobei das Online-Glasfasernachweisverfahren die folgenden Schritte umfasst:
Auswählen, durch ein Netzwerkelement-Verwaltungssystem, eines Glasfaserwegs, der nachgewiesen werden soll, und Einstellen relevanter Parameter einer Glasfasernachweisvorrichtung in Bezug auf den Glasfaserweg (S10), wobei die relevanten Parameter beinhalten: eine Wellenlänge, eine Pulsbreite, einen Messabstand und eine Erfassungszeit des Nachweislichts eines optischen Zeitbereichsreflektometers, OTDR, und Glasfaserparameter;
Senden, durch das Netzwerkelement-Verwaltungssystem, einer Nachweisstartanweisung für die Glasfasernachweisvorrichtung, um den Glasfaserweg gemäß der Nachweisstartanweisung (S20) nachzuweisen, und die Glasfasernachweisvorrichtung Nachweislicht auf den ausgewählten Glasfaserweg nach Empfang der Anweisung emittiert;
Steuern, durch das Netzwerkelement-Verwaltungssystem, der Glasfasernachweisvorrichtung, um zurückgegebenes reflektiertes Licht zu sammeln und das gesammelte reflektierte Licht zu analysieren, um Intensität und Empfangszeit des Nachweislichts und des reflektierten Lichts zu erfassen;
Berechnen einer Länge 1 und eines Glasfaserverlustkoeffizienten α der nachgewiesenen Glasfaser gemäß den Formeln: 1 = (1/2)^{∗}(c/n)^{∗} t und Ps = P0^{∗}e^{-2α1},
wobei c eine Lichtgeschwindigkeit darstellt, n einen Brechungsindex eines Mediums darstellt und t die Zeit darstellt, die von einem Moment, in dem das Nachweislicht emittiert wird, bis zu einem Moment, in dem das reflektierte Licht empfangen wird, verstrichen ist, und
Vergleichen der Intensität des Nachweislichts und der Intensität des reflektierten Lichts und der Länge 1 und des Glasfaserverlustkoeffizienten α der nachgewiesenen Glasfaser, um einen Arbeitszustand des Glasfaserwegs (S30) zu erhalten.

2. Glasfasernachweisverfahren nach Anspruch 1, wobei der Schritt des Auswählens eines Glasfaserwegs, der nachgewiesen werden soll, und des Einstellens relevanter Parameter einer Glasfasernachweisvorrichtung in Bezug auf den Glasfaserweg umfasst:
Auswählen des Glasfaserwegs, der über eine visuelle Schnittstelle nachgewiesen werden soll; und
Einstellen relevanter Parameter der Glasfasernachweisvorrichtung in Bezug auf den ausgewählten Glasfaserweg (S101).

3. Glasfasernachweisplattform umfassend: ein Netzwerkelement-Verwaltungssystem und eine Glasfasernachweisvorrichtung in Kommunikation mit dem Netzwerkelement-Verwaltungssystem, wobei das Netzwerkelement-Verwaltungssystem umfasst:
ein Auswahl- und Einstellmodul (70), das angeordnet ist, um einen Glasfaserweg, der nachgewiesen werden soll, auszuwählen und relevante Parameter einer Glasfasernachweisvorrichtung in Bezug auf den Glasfaserweg einzustellen, wobei die relevanten Parameter der Glasfasernachweisvorrichtung beinhalten: eine Wellenlänge, eine Pulsbreite, einen Messabstand und eine Erfassungszeit des Nachweislichts eines optischen Zeitbereichsreflektometers, OTDR, und Glasfaserparameter;
ein Nachweisstartmodul (80), das angeordnet ist, um eine Nachweisstartanweisung an die Glasfasernachweisvorrichtung zu senden, damit die Glasfasernachweisvorrichtung den Glasfaserweg gemäß der Nachweisstartanweisung nachweist;
ein Empfangs- und Analysemodul (90), das angeordnet ist, um ein Ergebnis des von der Glasfasernachweisvorrichtung auf dem Glasfaserweg durchgeführten Nachweises zu empfangen und das Ergebnis des Nachweises zu analysieren, um einen Arbeitszustand des Glasfaserwegs zu erfassen,
wobei die Glasfasernachweisvorrichtung angeordnet ist, um die Nachweisstartanweisung von dem Netzwerkelement-Verwaltungssystem zu empfangen; und
ein OTDR-Modul (100), das angeordnet ist, um die Glasfasernachweisvorrichtung zu steuern, um zurückgegebenes reflektiertes Licht zu sammeln und das gesammelte reflektierte Licht zu analysieren, um Intensität und Empfangszeit des Nachweislichts und des reflektierten Lichts zu erfassen, eine Länge 1 und einen Glasfaserverlustkoeffizienten α der nachgewiesenen Glasfaser gemäß den Formeln: 1 = (1/2)^{∗}(c/n)^{∗}t und Ps = P0^{∗}e^{-2α1} zu berechnen, wobei c die Lichtgeschwindigkeit darstellt, n einen Brechungsindex eines Mediums darstellt und t die Zeit darstellt, die von einem Moment, in dem das Nachweislicht emittiert wird, bis zu einem Moment, in dem das reflektierte Licht empfangen wird, verstrichen ist, und um die Intensität des Nachweislichts und der Intensität des reflektierten Lichts und die Länge 1 und den Glasfaserverlustkoeffizienten α der nachgewiesenen Glasfaser zu vergleichen.

4. Glasfasernachweisplattform nach Anspruch 3, wobei das Auswahl- und Einstellmodul (70) angeordnet ist, um:
den Glasfaserweg auszuwählen, der durch eine visuelle Schnittstelle nachgewiesen werden soll.

## Revendications

1. Procédé de détection de fibre optique, le procédé de détection de fibre optique en ligne comprenant les étapes suivantes :
la sélection par un système de gestion d'éléments de réseau d'un trajet de fibre optique qui doit être détecté et l'établissement de paramètres d'intérêt d'un dispositif de détection de fibre optique en rapport avec le trajet de fibre optique (S10), les paramètres d'intérêt comprenant : une longueur d'onde, une largeur d'impulsion, une distance de mesure et un temps d'acquisition de lumière de détection d'un réflectomètre temporel optique, OTDR, et des paramètres de fibre optique ;
l'envoi par le système de gestion d'éléments de réseau d'une instruction de démarrage de détection au dispositif de détection de fibre optique pour que le dispositif de détection de fibre optique détecte le trajet de fibre optique selon l'instruction de démarrage de détection (S20), et l'émission par le dispositif de détection de fibre optique d'une lumière de détection vers le trajet de fibre optique sélectionné après réception de l'instruction ;
la commande par le système de gestion d'éléments de réseau du dispositif de détection de fibre optique pour collecter la lumière réfléchie renvoyée et analyser la lumière réfléchie collectée pour acquérir une intensité et un temps de réception de la lumière de détection et de la lumière réfléchie ;
le calcul d'une longueur 1 et d'un coefficient de perte de fibre optique α de la fibre optique détectée selon les formules : 1 = (1/2)^{∗}(c/n)^{∗}t et Ps = P0^{∗}e-^{2α1},
où c représente une vitesse de lumière, n représente un indice de réfraction d'un milieu et t représente le temps écoulé d'un moment auquel la lumière de détection commence à être émise à un moment auquel la lumière réfléchie est reçue, et
la comparaison de l'intensité de la lumière de détection et de l'intensité de la lumière réfléchie et de la longueur 1 et du coefficient de perte de fibre optique α de la fibre optique détectée pour acquérir un statut de fonctionnement du trajet de fibre optique (S30).

2. Procédé de détection de fibre optique selon la revendication 1, dans lequel l'étape de sélection d'un trajet de fibre optique qui doit être détecté et l'établissement de paramètres d'intérêt d'un dispositif de détection de fibre optique en rapport avec le trajet de fibre optique comprend :
la sélection du trajet de fibre optique qui doit être détecté par le biais d'une interface visuelle ;
et l'établissement de paramètres d'intérêt du dispositif de détection de fibre optique en rapport avec le trajet de fibre optique sélectionné (S101).

3. Plateforme de détection de fibre optique comprenant : un système de gestion d'éléments de réseau et un dispositif de détection de fibre optique en communication avec le système de gestion d'éléments de réseau, le système de gestion d'éléments de réseau comprenant :
un module de sélection et d'établissement (70) agencé pour sélectionner un trajet de fibre optique qui doit être détecté et établir des paramètres d'intérêt d'un dispositif de détection de fibre optique en rapport avec le trajet de fibre optique (S10), les paramètres d'intérêt comprenant : une longueur d'onde, une largeur d'impulsion, une distance de mesure et un temps d'acquisition de lumière de détection d'un réflectomètre temporel optique, OTDR, et des paramètres de fibre optique ;
un module de démarrage de détection (80) agencé pour envoyer une instruction de démarrage de détection au dispositif de détection de fibre optique pour que le dispositif de détection de fibre optique détecte le trajet de fibre optique selon l'instruction de démarrage de détection ;
un module de réception et d'analyse (90) agencé pour recevoir un résultat de la détection effectuée par le dispositif de détection de fibre optique sur le trajet de fibre optique et analyser le résultat de la détection pour acquérir un statut de fonctionnement du trajet de fibre optique,
le dispositif de détection de fibre optique étant agencé pour recevoir l'instruction de démarrage de détection depuis le système de gestion d'éléments de réseau ; et
un module OTDR (100) agencé pour commander le dispositif de détection de fibre optique pour collecter la lumière réfléchie renvoyée et analyser la lumière réfléchie collectée pour acquérir une intensité et un temps de réception de la lumière de détection et de la lumière réfléchie, calculer une longueur 1 et d'un coefficient de perte de fibre optique α de la fibre optique détectée selon les formules : 1 = (1/2)^{∗}(c/n)^{∗}t et Ps = P0^{∗}e-^{2α1}, où c représente une vitesse de lumière, n représente un indice de réfraction d'un milieu et t représente le temps écoulé d'un moment auquel la lumière de détection commence à être émise à un moment auquel la lumière réfléchie est reçue, et comparer l'intensité de la lumière de détection et l'intensité de la lumière réfléchie et la longueur 1 et le coefficient de perte de fibre optique α de la fibre optique détectée pour acquérir un statut de fonctionnement du trajet de fibre optique.

4. Plateforme de détection de fibre optique selon la revendication 3, dans laquelle le module de sélection et d'établissement (70) est agencé pour :
sélectionner le trajet de fibre optique qui doit être détecté par le biais d'une interface visuelle.
